# EUROPEAN PATENT APPLICATION

(11) **EP 3 109 346 A1**
(43) Date of publication of application: **28.12.2016**
(21) Application number: 15752075.0
(22) Date of filing: 19.02.2015
(51) Int. Cl.: C25D 1/04, C25D 1/00, C25D 3/44, H01G 11/68, H01M 4/64, H01M 4/66

(54) **ELECTROLYTIC ALUMINUM FOIL, CURRENT COLLECTOR FOR POWER STORAGE DEVICE, ELECTRODE FOR POWER STORAGE DEVICE, AND POWER STORAGE DEVICE**

(30) Priority: 20.02.2014 JP 2014031066
(71) Applicant: Hitachi Metals, Ltd., Tokyo 1088224 (JP)
(72) Inventor: MATSUDA, Junichi, Mishima-gun Osaka 618-0013 (JP); OKAMOTO, Atsushi, Mishima-gun Osaka 618-0013 (JP)
(74) Representative: Thun, Clemens
(86) International application number: PCT/JP2015/054695
(87) International publication number: WO 2015/125899

(57) **Abstract**

An object of the present invention is to provide a thin electrolytic aluminum foil having a thickness of 20 µm or less, which has excellent flexibility so that winding-up is not hindered by bending or twisting of the foil. Another object is to provide a current collector for an electrical storage device using the electrolytic aluminum foil, an electrode for an electrical storage device, and an electrical storage device. An electrolytic aluminum foil of the present invention as a means for achieving the object is an electrolytic aluminum foil having a thickness of 20 μm or less, characterized in that the elastic modulus is smaller in both surface regions than in a center region in the thickness direction of the foil, and the difference in elastic modulus between the center region and each surface region of the foil as measured by a nanoindentation method is 8.0 GPa or less.

## Description

### Technical Field

The present invention relates to an electrolytic aluminum foil which can be used as a positive electrode current collector for an electrical storage device such as a lithium ion secondary battery and a supercapacitor (electrical double-layer capacitor, redox capacitor, lithium ion capacitor, etc.), for example. In addition, the present invention also relates to a current collector for an electrical storage device using the electrolytic aluminum foil, an electrode for an electrical storage device, and an electrical storage device.

### Background Art

It is a well-known fact that lithium ion secondary batteries, which have high energy density and whose discharge capacity does not significantly decrease, have been used as a power source for mobile tools such as mobile phones and laptop computers. In recent years, with the miniaturization of mobile tools, there also is a demand for the miniaturization of lithium ion secondary batteries to be mounted therein. In addition, with the development of hybrid cars, solar power generation, and other technologies as a measure to prevent global warming, etc., new applications of supercapacitors having high energy density, such as electrical double-layer capacitors, redox capacitors, and lithium ion capacitors, have been increasingly expanding, and there is a demand for a further increase in their energy density.

An electrical storage device such as a lithium ion secondary battery or a supercapacitor, has a structure in which, for example, a positive electrode and a negative electrode are arranged via a separator made of polyolefin or the like in an organic electrolytic solution containing a fluorine-containing compound such as LiPF₆ or NR₄·BF₄ (R is an alkyl group) as an electrolyte. Generally, the positive electrode includes a positive electrode active material, such as LiCoO₂ (lithium cobalt oxide) or active carbon, and a positive electrode current collector, while the negative electrode includes a negative electrode active material, such as graphite or active carbon, and a negative electrode current collector. With respect to their shape, generally, the active material is applied to the surface of the current collector and formed into a sheet. The electrodes are each subjected to high voltage and also immersed in the organic electrolytic solution that contains a fluorine-containing compound, which is highly corrosive. Accordingly, in particular, materials for a positive electrode current collector are required to have excellent electrical conductivity together with excellent corrosion resistance. Under such circumstances, currently, aluminum, which is a good electrical conductor and forms a passive film on the surface to have excellent corrosion resistance, is almost 100% used as a material for a positive electrode current collector. Incidentally, as materials for a negative electrode current collector, copper, nickel, and the like can be mentioned.

One method for providing an electrical storage device with smaller size and higher energy density is to thin a current collector that constitutes a sheet-shaped electrode. Currently, an aluminum foil having a thickness of about 15 to 20 µm produced by rolling is generally used as a positive electrode current collector. Therefore, the object can be achieved by further reducing the thickness of such an aluminum foil. However, with rolling, further reduction of the foil thickness on an industrial production scale is difficult.

Thus, as an aluminum foil production method to replace rolling, a method that produces an aluminum foil by electrolysis, that is, a method that produces an electrolytic aluminum foil, has been attracting attention. In Patent Document 1, the research group of the present inventors has proposed a method for producing an electrolytic aluminum foil, comprising forming an aluminum film on the surface of a substrate by electrolysis using a plating solution containing at least a dialkyl sulfone, an aluminum halide, and a nitrogen-containing compound, and then separating the film from the substrate. By this method, an electrolytic aluminum foil having a Vickers hardness of 40 to 120 Hv and excellent ductility has been obtained.

In the case of an industrial-scale electrolytic aluminum foil production, it is preferable that the step of forming an aluminum film on the surface of a substrate and the step of separating the film from the substrate are performed continuously using a cathode drum, rather than batchwise. The production of an electrolytic aluminum foil using a cathode drum comprises, for example, applying a current between a cathode drum partially immersed in a plating solution and an anode plate immersed in the plating solution to form an aluminum film on the surface of the cathode drum, and then separating, from the cathode drum, the aluminum film raised from the liquid surface by rotating the cathode drum. Such production can be performed using an electrolytic aluminum foil production apparatus as described in Patent Document 2. The aluminum film separated from the cathode drum can be, as an electrolytic aluminum foil, washed with water, then dried, and used for various applications.

### Prior Art Documents

### Patent Documents

Patent Document 1: WO 2011/001932
Patent Document 2: JP-A-2012-246561

### Summary of the Invention

### Problems that the Invention is to Solve

In the case where an electrolytic aluminum foil produced using the electrolytic aluminum foil production apparatus described in Patent Document 2, for example, is wound up as a foil strip into a roll, the foil during winding-up is subjected to a force that causes the bending or twisting of the foil. Therefore, with respect to an electrolytic aluminum foil to be wound up into a roll, even in the case of a thin foil having a thickness of 20 µm or less for use as a current collector for an electrical storage device or the like, it is desirable that the foil is resistant to bending or twisting and has excellent flexibility so that winding-up is not hindered. However, an electrolytic aluminum foil having excellent flexibility has not been reported in the past including Patent Document 1.

Thus, an object of the present invention is to provide a thin electrolytic aluminum foil having a thickness of 20 µm or less, which has excellent flexibility so that winding-up is not hindered by bending or twisting of the foil. Another object of the present invention is to provide a current collector for an electrical storage device using the electrolytic aluminum foil, an electrode for an electrical storage device, and an electrical storage device.

### Means for Solving the Problems

In view of the above points, the present inventors have conducted extensive research. As a result, they have found that when an electrolytic aluminum foil is produced by forming an aluminum film on the surface of a substrate by electrolysis using a plating solution containing at least a dialkyl sulfone, an aluminum halide, and a nitrogen-containing compound, and then separating the film from the substrate, the elastic modulus of such a foil is different between the center region in the thickness direction of the foil and surface regions; and that when the foil has a thickness of 20 µm or less, in the case where the elastic modulus is smaller in both surface regions than in the center region of the foil, and the difference in elastic modulus between the center region and each surface region of the foil as measured by a nanoindentation method is 8.0 GPa or less, such a film has excellent flexibility.

An electrolytic aluminum foil of the present invention accomplished based on the above findings is an electrolytic aluminum foil having a thickness of 20 µm or less, characterized in that the elastic modulus is smaller in both surface regions than in a center region in the thickness direction of the foil, and the difference in elastic modulus between the center region and each surface region of the foil as measured by a nanoindentation method is 8.0 GPa or less.

It is preferable that the above electrolytic aluminum foil is produced by forming an aluminum film on the surface of a substrate by electrolysis using a plating solution containing at least a dialkyl sulfone, an aluminum halide, and a nitrogen-containing compound, and then separating the film from the substrate, and that the nitrogen-containing compound contained in the plating solution is at least one member selected from the group consisting of an ammonium halide, a hydrogen halide salt of a primary amine, a hydrogen halide salt of a secondary amine, a hydrogen halide salt of a tertiary amine, a quaternary ammonium salt represented by the general formula: R¹R²R³R⁴N·X (R¹ to R⁴ independently represent an alkyl group and are the same as or different from one another, and X represents a counteranion for the quaternary ammonium cation), and a nitrogen-containing aromatic compound.

In the above electrolytic aluminum foil, it is preferable that the total content of carbon, sulfur, and chlorine contained in the electrolytic aluminum foil is 1.0 mass% or less.

It is preferable that the above electrolytic aluminum foil is produced by applying a current between a cathode drum partially immersed in a plating solution and an anode plate immersed in the plating solution to form an aluminum film on the surface of the cathode drum, and then separating, from the cathode drum, the aluminum film raised from the liquid surface by rotating the cathode drum.

In the above electrolytic aluminum foil, it is preferable that the hardness as measured by a nanoindentation method is 1.00 to 2.00 GPa in both the center region in the thickness direction of the foil and each surface region, and greater in at least one surface region than in the center region, and the difference in hardness between the center region and each surface region of the foil is 0.4 GPa or less.

In addition, a current collector for an electrical storage device of the present invention is characterized by comprising the above electrolytic aluminum foil.

In addition, an electrode for an electrical storage device of the present invention is characterized by comprising an electrode active material supported on the above electrolytic aluminum foil. In addition, an electrical storage device of the present invention is characterized by being configured using the above electrode for an electrical storage device.

### Effects of the Invention

According to the present invention, a thin electrolytic aluminum foil having a thickness of 20 µm or less, which has excellent flexibility so that winding-up is not hindered by bending or twisting of the foil, can be provided. In addition, according to the present invention, a current collector for an electrical storage device using the electrolytic aluminum foil, an electrode for an electrical storage device, and an electrical storage device can be provided.

### Brief Description of the Drawings

Fig. 1 is a perspective view schematically showing the internal structure of an example of an apparatus that can be used to produce an electrolytic aluminum foil of the present invention.
   Similarly, Fig. 2 is a front view schematically showing the internal structure.
Fig. 3 is a graph showing the elastic modulus distribution of each surface region based on the elastic modulus of the center region in the thickness direction of each electrolytic aluminum foil in Evaluation Test 1 of Examples.
   Similarly, Fig. 4 is a graph showing the hardness distribution of each surface region based on the hardness of the center region.
Fig. 5 is a graph showing the tensile test results of each electrolytic aluminum foil in Evaluation Test 3 of Examples.
Fig. 6 is a schematic view of an example of an electrical storage device using an electrolytic aluminum foil of the present invention as a positive electrode current collector for an electrical storage device in Application Example 1 of Examples.
Fig. 7 is an A-A cross-section of Fig. 6.

### Mode for Carrying Out the Invention

An electrolytic aluminum foil of the present invention is an electrolytic aluminum foil having a thickness of 20 µm or less, characterized in that the elastic modulus is smaller in both surface regions than in a center region in the thickness direction of the foil, and the difference in elastic modulus between the center region and each surface region of the foil as measured by a nanoindentation method is 8.0 GPa or less.

According to Hooke' s law: σ = Eε (σ: stress, E: elastic modulus, ε: elongation), under the same stress, the smaller the elastic modulus, the greater the elongation. The elastic modulus of the electrolytic aluminum foil of the present invention is smaller in both surface regions than in the center region in the thickness direction of the foil, and thus the elongation is greater in both surface regions than in the center region in the thickness direction of the foil; therefore, the foil has excellent flexibility. The reason why the elastic modulus of the electrolytic aluminum foil is different between the center region in the thickness direction and both surface regions is not necessarily clear. However, it is believed that components other than aluminum, such as carbon, sulfur, and chlorine, which are incorporated as impurities from a plating solution into the foil, are involved. It is believed that the contents of such components other than aluminum are the lower the better. For example, it is preferable that the total content of carbon, sulfur, and chlorine is 1.0 mass% or less, more preferably 0.5 mass% or less, and further preferably 0.2 mass% or less. However, in the electrolytic aluminum foil of the present invention, the difference in elastic modulus between the center region and each surface region of the foil as measured by a nanoindentation method is 8.0 GPa or less. When the difference in elastic modulus between the center region and each surface region of the foil is more than 8.0 GPa, the difference in elastic modulus is too much, and this adversely affects the flexibility of the foil. Incidentally, in the electrolytic aluminum foil of the present invention, the elastic modulus as measured by a nanoindentation method is 30.0 to 100.0 GPa, for example, in both the center region in the thickness direction and each surface region.

It is preferable that the aluminum content of the electrolytic aluminum foil of the present invention is 98.00 mass% or more. A high aluminum content leads to low volume resistivity, which is advantageous in that when the foil is used as a current collector for an electrical storage device, the electrical storage efficiency of the electrical storage device can be increased, and also advantageous in that because the heat dissipation is improved, the foil can be used for applications where excellent heat dissipation is required. In addition, a high aluminum content also leads to high ductility, which is advantageous in that the aluminum film is less likely to break when separated from a cathode drum. The aluminum content of the electrolytic aluminum foil of the present invention is more preferably 99.00 mass% or more, and further preferably 99.50 mass% or more (the upper limit is about 99.99 mass%). Incidentally, the upper limit of the thickness of the electrolytic aluminum foil of the present invention is 20 μm, while the lower limit is 1 μm, for example.

The hardness of the electrolytic aluminum foil of the present invention as measured by a nanoindentation method is 1.00 to 2.00 GPa, for example, in both the center region in the thickness direction of the foil and each surface region, and greater in at least one surface region than in the center region, and the difference in hardness between the center region and each surface region of the foil is 0.4 GPa or less.

The electrolytic aluminum foil of the present invention can be produced, for example, by forming an aluminum film on the surface of a substrate by electrolysis using a plating solution containing at least a dialkyl sulfone, an aluminum halide, and a nitrogen-containing compound, and then separating the film from the substrate. As the plating solution containing at least a dialkyl sulfone, an aluminum halide, and a nitrogen-containing compound, the plating solution proposed in Patent Document 1 by the research group of the present inventors, according to which a high-ductility, high-purity electrolytic aluminum foil can be produced at a high film formation rate, can be mentioned.

Examples of the dialkyl sulfone include those having a C₁₋₆ alkyl group (straight or branched), such as dimethyl sulfone, diethyl sulfone, dipropyl sulfone, dihexyl sulfone, and methylethyl sulfone. In terms of excellent electrical conductivity, availability, and the like, it is preferable to employ dimethyl sulfone.

Examples of the aluminum halide include aluminum chloride and aluminum bromide. In terms of minimizing the content of moisture in the plating solution, which serves as a factor that inhibits the deposition of aluminum, it is preferable that the aluminum halide used is an anhydride.

It is preferable that the nitrogen-containing compound is at least one member selected from the group consisting of an ammonium halide, a hydrogen halide salt of a primary amine, a hydrogen halide salt of a secondary amine, a hydrogen halide salt of a tertiary amine, a quaternary ammonium salt represented by the general formula: R¹R²R³R⁴N·X (R¹ to R⁴ independently represent an alkyl group and are the same as or different from one another,, and X represents a counteranion for the quaternary ammonium cation), and a nitrogen-containing aromatic compound. The nitrogen-containing compound may be a single kind, and it is also possible to use a mixture of two or more kinds. Examples of the ammonium halide include ammonium chloride and ammonium bromide. In addition, examples of the primary to tertiary amines include those having a C₁₋₆ alkyl group (straight or branched), such as methylamine, dimethylamine, trimethylamine, ethylamine, diethylamine, triethylamine, propylamine, dipropylamine, tripropylamine, hexylamine, and methylethylamine. Examples of the hydrogen halide include hydrogen chloride and hydrogen bromide. In the quaternary ammonium salt represented by the general formula: R¹R²R³R⁴N · X (R¹ to R⁴ independently represent an alkyl group and are the same as or different from one another, and X represents a counteranion for the quaternary ammonium cation), examples of the alkyl group represented by R¹ to R⁴ include C₁₋₆ alkyl groups (straight or branched) such as a methyl group, an ethyl group, a propyl group, and a hexyl group. Examples of X include halide ions such as a chlorine ion, a bromine ion, and an iodine ion, as well as BF₄⁻, PF₆⁻, and the like. Specific examples of the compound include tetramethylammonium chloride, tetramethylammonium bromide, tetramethylammonium iodide, and tetraethylammonium tetrafluoroborate. Examples of the nitrogen-containing aromatic compound include phenanthroline and aniline. In terms of facilitating the production of a high-ductility, high-purity electrolytic aluminum foil at a high film formation rate, preferred examples of the nitrogen-containing compound include hydrochlorides of tertiary amines, such as trimethylamine hydrochloride.

With respect to the blending ratio of a dialkyl sulfone, an aluminum halide, and a nitrogen-containing compound, for example, per 10 mol of the dialkyl sulfone, it is preferable that the amount of the aluminum halide is 1.5 to 6.0 mol, more preferably 2.0 to 5.0 mol, and further preferably 2.5 to 4.0 mol. It is preferable that the amount of the nitrogen-containing compound is 0.001 to 2.0 mol, more preferably 0.005 to 0.2 mol, and further preferably 0.01 to 0.1 mol. When the amount of the aluminum halide blended is less than 1.5 mol per 10 mol of the dialkyl sulfone, this may cause the darkening of the formed aluminum film (a phenomenon called burning) or reduce the film formation efficiency. Meanwhile, when it is more than 6.0 mol, the solution resistance of the resulting plating solution may be so high that the plating solution generates heat and decomposes. In addition, when the amount of the nitrogen-containing compound blended is less than 0.001 mol per 10 mol of the dialkyl sulfone, it may be difficult to obtain the effects of blending, that is, effects including the improvement of the film formation rate owing to the achievement of a plating treatment at a higher applied current density based on the improved electrical conductivity of the plating solution, the purity increase or the ductility improvement in the electrolytic aluminum foil, etc. Further, as a result of the increased incorporation of impurities such as carbon, sulfur, and chlorine, particularly carbon, into the electrolytic aluminum foil, the purity may decrease. Meanwhile, when it is more than 2.0 mol, due to an essential change in the composition of the plating solution, aluminum may not be deposited. It is preferable that the dialkyl sulfone, the aluminum halide, and the nitrogen-containing compound are mixed in a predetermined blending ratio in an inert gas atmosphere, such as argon gas or nitrogen gas, and then heated to the melting point of the dialkyl sulfone (about 110°C in the case of dimethyl sulfone), and the aluminum halide and the nitrogen-containing compound are dissolved in the dissolved dialkyl sulfone, thereby preparing a plating solution.

As the plating conditions, for example, the temperature of the plating solution may be 60 to 150°C, and the applied current density may be 0.25 to 20 A/dm². The lower limit of the temperature of the plating solution should be determined in consideration of the melting point of the plating solution, and is preferably 80°C, and more preferably 95°C (when the temperature is below the melting point of the plating solution, the plating solution solidifies, making it impossible to perform a plating treatment). Meanwhile, when the temperature of the plating solution is more than 150°C, this may accelerate the reaction between the aluminum film formed on the surface of the cathode drum and the plating solution, which increases the incorporation of impurities, such as carbon, sulfur, and chlorine, into the electrolytic aluminum foil, resulting in reduced purity. It is preferable that the upper limit of the temperature of the plating solution is 125°C, more preferably 115°C, and further preferably 110°C. In addition, when the applied current density is less than 0.25 A/dm², the film formation efficiency may decrease. Meanwhile, when it is more than 20 A/dm², because of the decomposition of the nitrogen-containing compound, etc., it may be impossible to perform a stable plating treatment or obtain a high-ductility, high-purity electrolytic aluminum foil, or the surface roughness Ra of the plating solution side surface of the electrolytic aluminum foil may be too high (e.g., 0.6 μm or more). It is preferable that the applied current density is 5 to 17 A/dm², more preferably 10 to 15 A/dm².

The electrolytic aluminum foil of the present invention may be produced batchwise, or may also be produced continuously using a cathode drum. However, it is preferable that the electrolytic aluminum foil is produced by a continuous production method using a cathode drum, which allows for production on an industrial scale, for example, specifically, by applying a current between a cathode drum partially immersed in a plating solution and an anode plate immersed in the plating solution to form an aluminum film on the surface of the cathode drum, and then separating, from the cathode drum, the aluminum film raised from the liquid surface by rotating the cathode drum.

The production of an electrolytic aluminum foil by applying a current between a cathode drum partially immersed in a plating solution and an anode plate immersed in the plating solution to form an aluminum film on the surface of the cathode drum, and then separating, from the cathode drum, the aluminum film raised from the liquid surface by rotating the cathode drum can be performed using an electrolytic aluminum foil production apparatus described in Patent Document 2, for example.

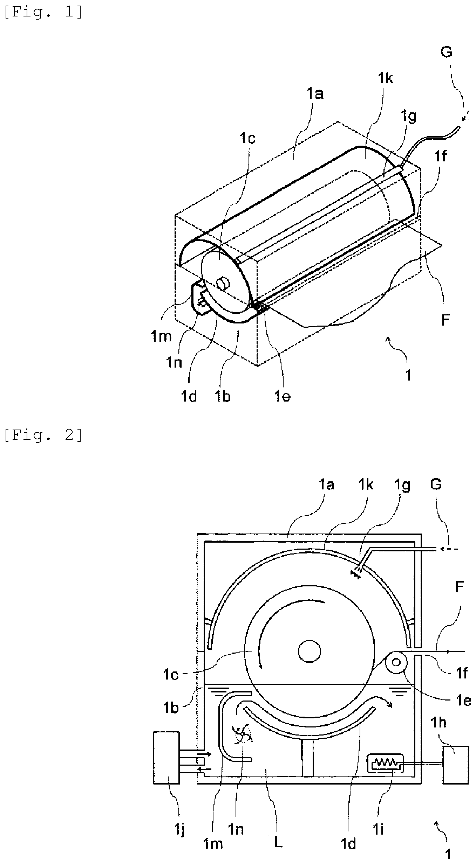

Fig. 1 is a perspective view schematically showing the internal structure of an electrolytic aluminum foil production apparatus described in Patent Document 2. Similarly, Fig. 2 is a front view schematically showing the internal structure. This electrolytic aluminum foil production apparatus 1 includes a lid portion 1a, an electrolytic tank 1b, a cathode drum 1c, an anode plate 1d, a guide roll 1e, a foil outlet port 1f, a gas supply port 1g, a heater power supply 1h, a heater 1i, a plating solution circulation system 1j, a ceiling portion 1k, a stirring flow guide 1m, a stirring blade 1n, and a non-illustrated direct-current power supply. The cathode drum 1c is made of a metal such as stainless steel, titanium, aluminum, nickel, or copper, and disposed to be partially immersed in a plating solution L stored in the electrolytic tank 1b. The anode plate 1d is made of aluminum, for example, and disposed in the plating solution L to face the surface of the cathode drum 1c (it is preferable that the purity of aluminum is 99.0% or more). The cathode drum 1c and the anode plate 1d are connected to the direct-current power supply. While energizing the two, the cathode drum 1c is rotated at a constant speed (the speed depends on the desired thickness of the electrolytic aluminum foil, the temperature of the plating solution, the applied current density, etc., but is 6 to 20 rad/h, e.g.), whereby an aluminum film is formed on the surface of the cathode drum 1c immersed in the plating solution L. During energization, the plating solution L is heated to and maintained at a predetermined temperature by the heater 1i connected to the heater power supply 1h. At the same time, the plating solution L is stirred by the rotation of the stirring blade 1n, and a homogeneous flow of the plating solution L is generated between the cathode drum 1c and the anode plate 1d by the stirring flow guide 1m, whereby a homogeneous aluminum film can be formed on the surface of the cathode drum 1c. When the cathode drum 1c is further rotated, the aluminum film formed on the surface of the cathode drum 1c is raised from the liquid surface, and also a new aluminum film is formed on the surface of the cathode drum 1c newly immersed in the plating solution L. The aluminum film raised from the liquid surface is guided at the end portion thereof to the guide roll 1e and separated from the cathode drum 1c. The film is thus pulled outside the apparatus from the foil outlet port 1f provided in the side surface of the apparatus, as an electrolytic aluminum foil F. In this manner, the formation of an aluminum film on the surface of the cathode drum 1c and the separation of the film from the cathode drum 1c are continuously performed, and the electrolytic aluminum foil F pulled outside the apparatus is immediately washed with water to remove a plating solution adhering to the surface thereof and then dried, and thus can be used for various applications.

In the case where an electrolytic aluminum foil is produced using an electrolytic aluminum foil production apparatus described in Patent Document 2, it is preferable that a gas G having a dew point of -50. 0°C or less is supplied as a treatment atmosphere control gas from the gas supply port 1g into the apparatus at a supply rate of 1 to 50 L/min, for example, to control the dew point of the treatment atmosphere to be -50.0°C or less. As a result of controlling the dew point of the treatment atmosphere to be -50.0°C or less, when the aluminum film raised from the liquid surface is separated from the cathode drum 1c to obtain the electrolytic aluminum foil F, discoloration that is attributable to the reaction of a plating solution adhering to the surface of the foil on the side that has been in contact with the plating solution L (in Fig. 2, the lower surface) with the moisture in the treatment atmosphere, resulting in the formation of an aluminum oxide film or hydroxide film on the foil surface, is prevented. The gas G having a dew point of -50.0°C or less to be supplied into the apparatus as a treatment atmosphere control gas is not particularly limited in kind as long as the gas has a dew point of -50.0°C or less. However, it is preferable that the kind of the gas is an inert gas, such as argon gas or nitrogen gas. In terms of the ease of preparing the treatment atmosphere control gas, etc., the lower limit of the dew point of the treatment atmosphere is -80.0°C, for example.

Because discoloration that is attributable to the reaction of a plating solution adhering to the surface of an electrolytic aluminum foil on the side that has been in contact with the plating solution (the opposite surface to the surface on the side that has been in contact with the cathode drum; hereinafter, the surface on the side that has been in contact with the plating solution is referred to as "plating solution side surface", and the surface on the side that has been in contact with the cathode drum is referred to as "cathode drum side surface") with the moisture in the treatment atmosphere, resulting in the formation of an aluminum oxide film or hydroxide film on the foil surface, is prevented, in the L*a*b* color space (SCI method), the L* value of the plating solution side surface of the foil is 86.00 or more, while the L* value of the cathode drum side surface of the foil (surface no plating solution having adhering thereto) is similarly 86.00 or more. Thus, the foil has a uniform, white appearance on both sides. Here, an L* value in the L*a*b* color space indicates lightness and is a numerical value within a range of 0 (black) to 100 (white). The L* value of the plating solution side surface of the electrolytic aluminum foil is about 86.00 to 88.00. Meanwhile, the L* value of the cathode drum side surface of the foil depends on the surface roughness Ra of the cathode drum side surface of the foil, which reflects the surface roughness Ra of the cathode drum, but is about 87.00 to 96.00. In order to use an electrolytic aluminum foil without distinction between front and back, it is preferable that the difference between the L* value of the plating solution side surface and the L* value of the cathode barrel side surface of the foil is 9.00 or less, more preferably 7.00 or less, and further preferably 5.00 or less. For example, in the case where the surface roughness Ra of the cathode drum is 0.50 to 0.60 μm, the cathode drum side surface of the resulting electrolytic aluminum foil has a surface roughness Ra of 0.50 to 0.60 μm, and the L* value thereof is about 87.00 to 90.00, which is similar to the L* value of the plating solution side surface. In addition, it is preferable that in the L*a*b* color space (SCI method), both the plating solution side surface and the cathode drum side surface of the electrolytic aluminum foil have an a* value of 1.00 or less and a b* value of 5.00 or less. In the L*a*b* color space, with respect to the a* value, the + side is the direction of red, and the - side is the direction of green. With respect to the b* value, the + side is the direction of yellow, and the - side is the direction of blue. Incidentally, measurement methods for the L*a*b* color space include the SCI method, in which light is measured including specularly reflected light, and the SCE method, in which specularly reflected light is removed, and only diffusely reflected light is measured. Here, the SCI method, according to which, regardless of the surface conditions of the object to be measured, the color of the material itself can be evaluated, is employed.

### Examples

Hereinafter, the present invention will be described in detail with reference to the examples. However, the present invention should not be construed as being limited to the following descriptions.

### Example 1:

In a nitrogen gas atmosphere, dimethyl sulfone, anhydrous aluminum chloride, and trimethylamine hydrochloride were blended in a molar ratio of 10:3.8:0.05 and dissolved at 110°C to prepare an electrolytic aluminum plating solution. Using an electrolytic aluminum foil production apparatus described in Patent Document 2 shown in Figs. 1 and 2 (cathode drum: diameter: 140 mm × width: 200 mm, made of titanium, surface roughness Ra: 0.08 μm; anode plate: made of purity 99.0% aluminum), while rotating the cathode drum at a rotational speed of 15 rad/h, an aluminum film was formed on the surface thereof under plating conditions where the temperature of the plating solution was 105°C and the applied current density was 10 A/dm². Subsequently, the aluminum film raised from the liquid surface was separated from the cathode drum to give an electrolytic aluminum foil (guide roll height: 45 mm from the liquid surface of the plating solution). At this time, nitrogen gas having a dew point of -60. 0°C was supplied at a supply rate of 30 L/min into the apparatus to control the treatment atmosphere. The electrolytic aluminum foil pulled outside the apparatus was immediately sprayed with water on both sides for primary washing in order to remove a plating solution adhering to the foil surface, then immersed in a water tank for secondary washing, and dried to give an electrolytic aluminum foil with length: 400 mm × width: 200 mm × thickness: 12 μm.

### Example 2:

An electrolytic aluminum foil with length: 400 mm × width: 200 mm × thickness : 12 µm was obtained in the same manner as in Example 1, except that an anode plate made of purity 99. 9% aluminum was used.

### Example 3:

An electrolytic aluminum foil with length: 400 mm × width: 200 mm × thickness : 12 µm was obtained in the same manner as in Example 1, except that the applied current density was 14 A/dm², and the rotational speed of the cathode drum was 20 rad/h.

### Example 4:

An electrolytic aluminum foil with length: 400 mm × width: 200 mm × thickness : 20 μm was obtained in the same manner as in Example 1, except that an electrolytic aluminum plating solution prepared from dimethyl sulfone, anhydrous aluminum chloride, and trimethylamine hydrochloride blended in a molar ratio of 10:3.8:0.02 and dissolved at 110°C was used, and the rotational speed of the cathode drum was 9 rad/h.

### Comparative Example 1:

An electrolytic aluminum foil with length: 400 mm × width: 200 mm × thickness : 20 μm was obtained in the same manner as in Example 1, except that an electrolytic aluminum plating solution prepared from dimethyl sulfone, anhydrous aluminum chloride, and trimethylamine hydrochloride blended in a molar ratio of 10:3.8:0.0005 and dissolved at 110°C was used, and the rotational speed of the cathode drum was 9 rad/h.

### Comparative Example 2:

An electrolytic aluminum foil with length: 400 mm × width: 200 mm × thickness : 12 µm was obtained in the same manner as in Example 1, except that the temperature of the plating solution was 130°C.

### Evaluation Test 1: Measurement of Elastic Modulus and Hardness of Electrolytic Aluminum Foil by Nanoindentation Method

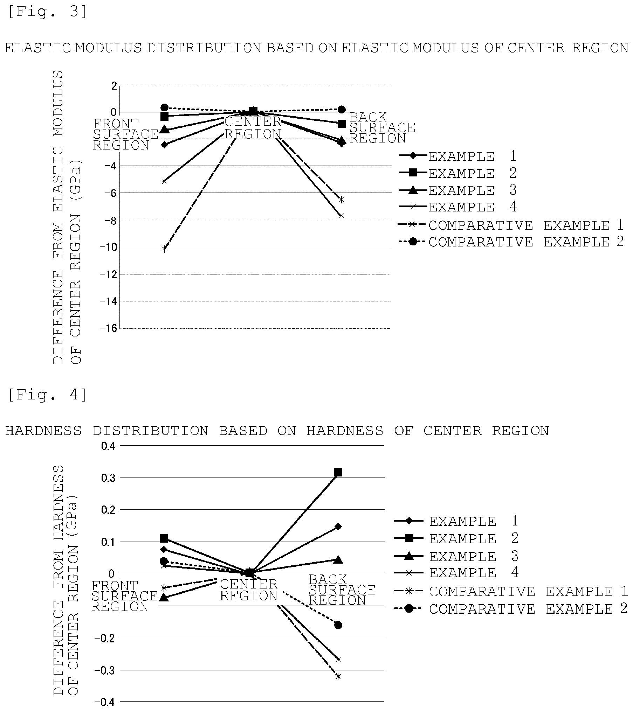

In measurement by a nanoindentation method, an ultralow-load indentation test is performed with high accuracy, and material properties such as elastic modulus (Young's modulus) and hardness can be determined by one indentation test as continuous functions in the depth direction. The elastic modulus and the hardness are calculated from the variation curve of the indentation load and the depth of the indenter continuously measured, not from a microscope image. With respect to each of the electrolytic aluminum foils of Examples 1 to 4 and Comparative Examples 1 and 2, the elastic modulus and hardness were measured using Triboindenter manufactured by Hysitron Inc., as an analyzer (nanoindenter) under the following conditions. The results are shown in Table 1. In addition, with respect to each of the electrolytic aluminum foils of Examples 1 to 4 and Comparative Examples 1 and 2, Fig. 3 shows the elastic modulus distribution of each surface region based on the elastic modulus of the center region in the thickness direction of the foil, and Fig. 4 shows the hardness distribution of each surface region based on the hardness of the center region.
- Specification indenter: Berkovich (triangular pyramid shape)
- Measurement method: Single indentation measurement
- Temperature: Room temperature (25°C)
- Indentation depth setting: 100 nm
- Measurement position: Points 2 µm in the depth direction from the respective surface regions (the plating solution side surface (front surface region) and the cathode drum side surface (back surface region)) and a center region; three points in total

### Evaluation Test 2: 180° Bending Test on Electrolytic Aluminum Foil

An electrolytic aluminum foil having a length of 50 mm was bent at 180° to bring both ends into contact with each other, and the occurrence of breakage was visually observed and rated according to the following criteria. The results are shown in Table 1.
- ⊚: No breakage occurs after 180° bending and even after pressing the fold.
- ○: No breakage occurs after 180° bending, but breakage occurs when pressing the fold.
- X: Breakage occurs during 180° bending.

**[Table 1]**

| | Foil Thickness (μm) | Elastic Modulus (GPa) | | | | Hardness (GPa) | | | | 180° Bending Rating |
|---|---|---|---|---|---|---|---|---|---|---|
| | | Measurement Points in Thickness Direction | | | Difference between Center Region and Each Surface Region (each surface region - center region) | Measurement Points in Thickness Direction | | | Difference between Center Region and Each Surface Region (each surface region - center region) | |
| | | Front Surface Region | Center Region | Back Surface Region | | Front Surface Region | Center Region | Back Surface Region | | |
| Example 1 | 12 | 59.0 | 61.5 | 59.2 | -2.5/-2.3 | 1.29 | 1.21 | 1.36 | 0.08/0.15 | ⊚ (Pass) |
| Example 2 | 12 | 62.3 | 62.6 | 61.7 | -0.3/-0.9 | 1.24 | 1.13 | 1.45 | 0.11/0.32 | ⊚ (Pass) |
| Example 3 | 12 | 40.8 | 42.1 | 40.1 | -1.3/-2.0 | 1.12 | 1.19 | 1.24 | -0.07/0.05 | ⊚ (Pass) |
| Example 4 | 20 | 76.1 | 81.3 | 73.6 | -5.2/-7.7 | 1.91 | 1.88 | 1.61 | 0.03/-0.27 | ○ (Pass) |
| Comparative Example 1 | 20 | 73.9 | 84.0 | 77.6 | -10.1/-6.4 | 2.74 | 2.79 | 2.47 | -0.05/-0.32 | × (Fail) |
| Comparative Example 2 | 12 | 37.0 | 36.6 | 36.8 | 0.4/0.2 | 1.53 | 1.49 | 1.33 | 0.04/-0.16 | × (Fail) |

As is clear from Table 1, and Figs. 3 and 4, in each of the electrolytic aluminum foils of Examples 1 to 4 having a thickness of 20 µm or less, the elastic modulus was smaller in both surface regions than in the center region in the thickness direction of the foil, and the difference in elastic modulus between the center region and each surface region of the foil was 8.0 GPa or less; as a result, they passed the 180° bending test and had excellent flexibility. The elastic modulus was 30.0 to 100.0 GPa in both the center region in the thickness direction of the foil and each surface region. In addition, the hardness of the foil was 1.00 to 2.00 GPa in both the center region in the thickness direction of the foil and each surface region, and greater in at least one surface region than in the central region, and the difference in hardness between the center region and each surface region of the foil was 0.4 GPa or less. Because the electrolytic aluminum foils produced by the methods of Examples 1 to 4 had excellent flexibility, winding-up was not hindered by bending or twisting of the foils, and they could each be wound up as a foil strip into a roll having an overall length of at least 5 m.

### Evaluation Test 3: Tensile Test on Electrolytic Aluminum Foil

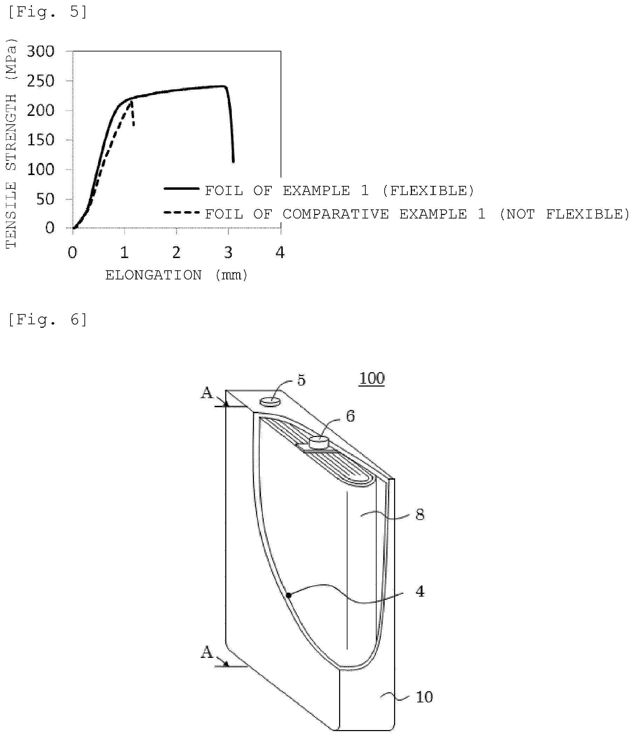

The electrolytic aluminum foils of Example 1 and Comparative Example 1 were each subjected to a tensile test using Autograph AGS-500NX manufactured by Shimadzu Corporation (specimen size: length: 70 mm × width: 10 mm, chuck-to-chuck distance: 30 mm, tensile rate: 50 mm/min, at room temperature). The results are shown in Fig. 5. As is clear from Fig. 5, the electrolytic aluminum foil of Example 1 had excellent flexibility. It exhibited high tensile strength, and then it was significantly elongated in the plastic deformation region. Meanwhile, although the electrolytic aluminum foil of Comparative Example 1 exhibited high tensile strength, because of the lack of flexibility, it broke before plastic deformation. The electrolytic aluminum foils of Examples 2 to 4 and Comparative Example 2 were also subjected to the same tensile test. As a result, the electrolytic aluminum foils of Examples 2 to 4 showed the same tendency as the electrolytic aluminum foil of Example 1, and the electrolytic aluminum foil of Comparative Example 2 showed the same tendency as the electrolytic aluminum foil of Comparative Example 1.

Incidentally, with respect to each of the electrolytic aluminum foils of Examples 1 to 4 and Comparative Examples 1 and 2, the contents of carbon and sulfur were measured by Carbon/Sulfur Analyzer EMIA-820W manufactured by Horiba Ltd., while the content of chlorine was measured using Wavelength Dispersive X-Ray Fluorescence Spectrometer RIX-2100 manufactured by Rigaku Corporation, and the remainder was taken as the aluminum content. The results are shown in Table 2.

**[Table 2]**

| | Foil Thickness (μm) | Foil Composition (mass%) | | | | |
|---|---|---|---|---|---|---|
| | | C Content | S Content | Cl Content | C+S+Cl Content | Al Content |
| Example 1 | 12 | 0.07 | 0.04 | 0.03 | 0.14 | 99.86 |
| Example 2 | 12 | 0.08 | 0.05 | 0.06 | 0.19 | 99.81 |
| Example 3 | 12 | 0.07 | 0.03 | 0.09 | 0.19 | 99.81 |
| Example 4 | 20 | 0.17 | 0.15 | 0.12 | 0.44 | 99.56 |
| Comparative Example 1 | 20 | 0.37 | 0.44 | 0.66 | 1.47 | 98.53 |
| Comparative Example 2 | 12 | 0.14 | 0.11 | 0.38 | 0.63 | 99.37 |

As is clear from Table 2, it turned out that in an electrolytic aluminum foil having a thickness of 20 µm or less, when the thickness is the same, the lower the contents of impurities (carbon, sulfur, and chlorine) (the higher the aluminum content), the better the flexibility.

In addition, with respect to each of the electrolytic aluminum foils of Examples 1 to 4 and Comparative Examples 1 and 2, the appearance was observed, and also the L* values, the a* values, and the b* values of the surfaces of the foil in the L*a*b* color space were measured. As a result, in all the foils, the plating solution side surface and the cathode drum side surface both had a uniform, white appearance, and no surface discoloration was observed. Each had an L* value of 86.00 to 96.00, an a* value of -1.00 to 1.00, and a b* value of 0.00 to 5.00. Incidentally, for the measurement of the L* values, the a* values, and the b* values of the foil surfaces, the SCI method was employed. Spectrocolorimeter CM-700d manufactured by KONICA MINOLTA, Inc. was equipped with a white calibration cap to perform white calibration, and then measurement was performed in a dark room using the attached φ 8 mm target mask equipped with a stabilizer (CM-A179).

### Application Example 1: Fabrication of Electrical Storage Device using Electrolytic Aluminum Foil of the Present Invention as Positive Electrode Current Collector for Electrical Storage Device

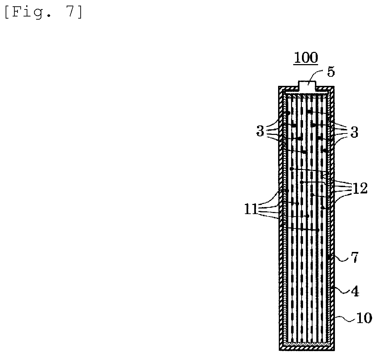

Using the electrolytic aluminum foil of Example 1 as a positive electrode current collector, a positive electrode active material was applied to the surface thereof, and the positive electrode thus obtained was used to fabricate an electrical storage device shown in Fig. 6. The electrical storage device 100 has a structure in which a casing 10 is filled with an organic electrolytic solution 7 containing a fluorine compound, and an electrode unit 8 is immersed in the organic electrolytic solution. The electrode unit 8 has a structure in which a positive electrode, a negative electrode, and a separator, which are strip-shaped thin foils, are stacked in the order of positive electrode / separator / negative electrode / separator into a laminate and wound. The casing 10 is made of a metal material and has an insulating layer 4 formed therein. In addition, the casing 10 is provided with a positive electrode terminal 5 and a negative electrode terminal 6, which serve as connection terminals to an external device. The positive electrode terminal 5 is electrically connected to a positive electrode 11 of the electrode unit 8, and the negative electrode terminal 6 is electrically connected to a negative electrode 12 of the electrode unit 8. Fig. 7 is an A-A cross-section of Fig. 6. The positive electrode 11 and the negative electrode 12 are physically isolated by a separator 3 and thus are not in direct electrical communication with each other. However, the separator 3 is made of a porous material which the organic electrolytic solution 7 can pass through, and thus the positive electrode 11 and the negative electrode 12 are electrically connected via the organic electrolytic solution 7.

### Industrial Applicability

The present invention makes it possible to provide a thin electrolytic aluminum foil having a thickness of 20 µm or less, which has excellent flexibility so that winding-up is not hindered by bending or twisting of the foil, and is industrially applicable in this respect. The present invention also makes it possible to provide a current collector for an electrical storage device using the electrolytic aluminum foil, an electrode for an electrical storage device, and an electrical storage device, and is industrially applicable in this respect.

### Explanation of Reference Numerals

- 1:: Electrolytic aluminum foil production apparatus
- 1a:: Lid portion
- 1b:: Electrolytic tank
- 1c:: Cathode drum
- 1d:: Anode plate
- 1e:: Guide roll
- 1f:: Foil outlet port
- 1g:: Gas supply port
- 1h:: Heater power supply
- 1i:: Heater
- 1j:: Plating solution circulation system
- 1k:: Ceiling portion
- 1m:: Stirring flow guide
- 1n:: Stirring blade
- F:: Electrolytic aluminum foil
- G:: Treatment atmosphere control gas
- L:: Plating solution
- 3:: Separator
- 4:: Insulating layer
- 5:: Positive electrode terminal
- 6:: Negative electrode terminal
- 7:: Organic electrolytic solution
- 8:: Electrode unit
- 10:: Casing
- 11:: Positive electrode
- 12:: Negative electrode
- 100:: Electrical storage device

## Claims

1. An electrolytic aluminum foil having a thickness of 20 μm or less, **characterized in that** the elastic modulus is smaller in both surface regions than in a center region in the thickness direction of the foil, and the difference in elastic modulus between the center region and each surface region of the foil as measured by a nanoindentation method is 8.0 GPa or less.

2. The electrolytic aluminum foil according to claim 1 produced by forming an aluminum film on the surface of a substrate by electrolysis using a plating solution containing at least a dialkyl sulfone, an aluminum halide, and a nitrogen-containing compound, and then separating the film from the substrate,
the electrolytic aluminum foil being **characterized in that** the nitrogen-containing compound contained in the plating solution is at least one member selected from the group consisting of an ammonium halide, a hydrogen halide salt of a primary amine, a hydrogen halide salt of a secondary amine, a hydrogen halide salt of a tertiary amine, a quaternary ammonium salt represented by the general formula: R¹R²R³R⁴N· X (R¹ to R⁴ independently represent an alkyl group and are the same as or different from one another, and X represents a counteranion for the quaternary ammonium cation), and a nitrogen-containing aromatic compound.

3. The electrolytic aluminum foil according to claim 1,
**characterized in that** the total content of carbon, sulfur, and chlorine contained in the electrolytic aluminum foil is 1.0 mass% or less.

4. The electrolytic aluminum foil according to claim 1,
**characterized in that** the electrolytic aluminum foil is produced by applying a current between a cathode drum partially immersed in a plating solution and an anode plate immersed in the plating solution to form an aluminum film on the surface of the cathode drum, and then separating, from the cathode drum, the aluminum film raised from the liquid surface by rotating the cathode drum.

5. The electrolytic aluminum foil according to claim 1,
**characterized in that** the hardness as measured by a nanoindentation method is 1.00 to 2.00 GPa in both the center region in the thickness direction of the foil and each surface region, and greater in at least one surface region than in the center region, and the difference in hardness between the center region and each surface region of the foil is 0.4 GPa or less.

6. A current collector for an electrical storage device,
**characterized by** comprising the electrolytic aluminum foil according to claim 1.

7. An electrode for an electrical storage device,
**characterized by** comprising an electrode active material supported on the electrolytic aluminum foil according to claim 1.

8. An electrical storage device, **characterized by** being configured using the electrode for an electrical storage device according to claim 7.
